# EUROPEAN PATENT SPECIFICATION

(11) **EP 3 136 404 B1**
(45) Date of publication and mention of the grant of the patent: **31.03.2021**
(21) Application number: 14893090.2
(22) Date of filing: 06.11.2014
(51) Int. Cl.: H02M 1/00, H01F 3/12, H01F 38/08

(54) **COUPLING INDUCTOR**
KOPPELINDUKTOR
BOBINE DE COUPLAGE

(30) Priority: 27.05.2014 CN 201410228172
(43) Date of publication of application: 01.03.2017
(73) Proprietor: Huawei Technologies Co., Ltd., Shenzhen, Guangdong 518129 (CN)
(72) Inventor: LIU, Yunfeng, Shenzhen Guangdong 518129 (CN); YE, Fei, Shenzhen Guangdong 518129 (CN); HU, Yanshen, Shenzhen Guangdong 518129 (CN)
(74) Representative: Thun, Clemens
(86) International application number: PCT/CN2014/090442
(87) International publication number: WO 2015/180417

(56) References cited:
- EP-A1- 2 461 334
- CN-A- 103 413 662
- CN-A- 103 730 230
- CN-A- 104 021 920
- CN-U- 201 508 741
- CN-U- 203 397 878
- DE-A1-102004 023 905
- JP-A- 2006 108 389
- US-A- 5 525 951
- US-A1- 2008 094 159
- US-A1- 2009 231 081
- US-B1- 6 980 077
- JIELI LI ET AL: "Coupled-inductor design optimization for fast-response low-voltage DC-DC converters", APEC 2002. 17TH. ANNUAL IEEE APPLIED POWER ELECTRONICS CONFERENCE AND EXPOSITION. DALLAS, TX, MARCH 10 - 14, 2002; [ANNUAL APPLIED POWER ELECTRONICS CONFERENCE], NEW YORK, NY : IEEE, US, vol. 2, 10 March 2002 (2002-03-10), pages 817-823, XP010583012, DOI: 10.1109/APEC.2002.989338 ISBN: 978-0-7803-7404-1

## Description

### TECHNICAL FIELD

The present invention relates to the field of circuits, and in particular, to a coupled inductor for a power converter.

### BACKGROUND

Currently, multi-level power converters using an interleaved parallel technology have been widely applied. This type of multi-level power converter includes multiple power bridge arms connected in parallel. The multiple power bridge arms are coupled by using multiple windings or coils in a coupled inductor, and run in an interleaved manner. The interleaved parallel technology can reduce an output ripple current and improve an frequency of output, and therefore output inductance of a filter inductor can be reduced, thereby reducing a volume and costs of the inductor.

For example, JIELI LI et. al.: "Coupled-inductor design optimization for fast-response low-voltage DC-DC converters", APEC 2002, 17TH. Annual IEEE applied power electronics conference and exposition, Dallas, TX, March 10 - 14, 2002; vol. 2; 10 March 2002, pages 817 - 823, refers to a coupled inductor design optimization for fast response low voltage DC-DC converters.

Further, CN 103730230 A refers to a magnetic integrated inductor. The magnetic integrated inductor comprises two magnetic cores and two coils which are assembled up and down relatively, wherein each magnetic core comprises a base plate, two first magnetic core columns and two second magnetic core columns; each two first magnetic core columns are positioned at the left and right sides of the base plate; each two second magnetic core columns are positioned at the middle parts of the upper and lower sides of the base plate; the base plate, each two first magnetic core columns and each two second magnetic core columns are integrally formed to form one magnetic core; after the two magnetic cores are assembled up and down relatively, one or more first air gaps are formed between the tops and bottoms of the first magnetic core columns on the same side; one or more second air gaps are formed between the tops and bottoms of the second magnetic core columns on the same side; the length sum of the first air gaps of the magnetic cores is less than that of the second air gaps; the two coils wind the opposite first magnetic core columns on left and right sides of the two magnetic cores respectively to form a left inductance coil and a right inductance coil; the directions of magnetic fields generated by the two inductance coils respectively during electrification excitation working are the same along upper and lower directions of the wound first magnetic core columns.

Further, JP 2006 108389A refers a pair of cores having legs are provided and these cores are butted each other such that the legs face each other. Each core has a middle leg for winding a primary coil, and two outer legs and for winding secondary coils arranged on the opposite sides of the middle leg. Leakage legs constituting leakage magnetic paths are provided between the middle leg and the outer legs, respectively. Further, US 2008/0094159A1 refers to a three-phase AC or two-phase DC choke arrangement of a frequency converter, in which is a magnetic core, in which are the phase-specific pillars of the AC choke arrangement or the branch-specific pillars of the DC choke arrangement, around which are arranged the phase-specific windings of the AC choke arrangement or the branch-specific windings of the DC choke arrangement to filter difference-mode currents, and in which an additional pillar for damping common-mode currents is arranged in the magnetic core of the choke. The additional pillar is arranged without the phase-specific or branch-specific windings fitted around it, in which case damping of the common-mode currents is achieved by means of the common-mode impedance formed by the windings arranged around the additional pillar and around the phase-specific or the branch-specific pillars.

Further, EP 2 461 334 A1 refers to an inductor capable of realizing a voltage conversion circuit, which is compact in size and is able to provide a suitable output. To achieve the above described object, the inductor has a core and a plurality of windings, and the core comprises a plurality of arms for windings around which the plurality of windings are respectively wound; at least one common arm which forms magnetic loops with the plurality of arms for windings, respectively; and a pair of base parts. The plurality of arms for windings and the common arm are located between the pair of base parts.

### AMENDED DESCRIPTION

Further, US 5,525,951 refers to two coils wound over adjacent portions of a first magnetic core having two closed magnetic circuits and a second magnetic core. The winding directions of the two coils are set so that the magnetomotive forces generated by both coils may cancel each other in the second magnetic core. The magnetic fluxes flowing in the first magnetic core decrease the higher harmonics of an input current of the power source circuit, while the magnetic fluxes flowing in the second magnetic core decrease the noise between the line and the ground. That is, the choke coil performs the function of choke coil and the function of noise filter at the same time.

Further, CN 201508741 U refers to a filter inductor assembly, which comprises a magnetic-conductive core and a coil, wherein the magnetic-conductive core comprises a first magnetic-conductive assembly and a second magnetic-conductive assembly which are mutually independent. Thus the coil can be wound on at least one of the first magnetic-conductive assembly and the second magnetic-conductive assembly by a machine, and the first magnetic-conductive assembly and the second magnetic-conductive assembly are mutually combined to form at least one closed structure.

Further, US 6,980,077 B1 refers to a composite magnetic core formed of a high permeability material and a lower permeability, high saturation flux density material prevents core saturation without an air gap and reduces eddy current losses and loss of inductance. The composite core is configured such that the low permeability, high saturation material is located where the flux accumulates from the high permeability sections. The presence of magnetic material having a relatively high permeability keeps the flux confined within the core thereby preventing fringing flux from spilling out into the winding arrangement. This composite core configuration balances the requirements of preventing core saturation and minimizing eddy current losses without increasing either the height or width of the core or the number of windings.

The document US 2009/0231081 A1 shows a coupled inductor comprising a magnetic core and N windings wound around N first magnetic cylinders. Moreover, the coupled inductor comprises N+1 second magnetic cylinders, the windings are not wound around. The first magnetic cylinders and the second magnetic cylinders are each arranged between two magnetic yokes. The first magnetic cylinders are arranged along a first line, while the second magnetic cylinders are arranged along a second line.

To meet a requirement of the multi-level power converter on system stability, a filter inductor generally needs to be disposed to provide enough inductance of the filter inductor. Because the coupled inductor can generate leakage inductance, the leakage inductance of the coupled inductor can be used in the multi-level power converter to replace the filter inductor of the multi-level power converter. This not only can reduce system costs and but also can improve system performance.

However, because the leakage inductance in the coupled inductor has relatively low inductance, which is equivalent to that the filter inductor has relatively low inductance, when the coupled inductor is connected to the power converter, performance requirements such as system stability, a ripple current, and total harmonic distortion of current on input (THDi) cannot be met.

### SUMMARY

Embodiments of the present invention provide a coupled inductor for a power converter, which can increase inductance of leakage inductance of the coupled inductor, thereby improving performance of a power converter connected to the coupled inductor.

In a first aspect a coupled inductor is provided, comprising: a magnetic core and three windings, wherein
the magnetic core comprises:
- three first magnetic cylinders, two second magnetic cylinders, and two opposite magnet yokes and each of the three windings is arranged on a corresponding first magnetic cylinder of the three first magnetic cylinders, so that one of the three windings is arranged on one of the three first magnetic cylinders, wherein the three first magnetic cylinders and the two second magnetic cylinders have a cylinder, triangular prism, rectangular, or polygonal prism shape,
- the three first magnetic cylinders and the two second magnetic cylinders are disposed between the two opposite magnet yokes;
- the three first magnetic cylinders are arranged along a first straight line and the two second magnetic cylinders are arranged on a second straight line, and an extension direction of the first straight line is parallel to an extension direction of the second straight line, wherein the first straight line is distanced to the second straight line, and
- in the extension direction of the first or second straight line, a first second magnetic cylinder of the two second magnetic cylinders is 5 arranged between a first and a second first magnetic cylinder of the three first magnetic cylinders and a second second magnetic cylinder of the two second magnetic cylinders is arranged between the second and a third first magnetic cylinder of the three first magnetic cylinders.

In a first implementation form of the first aspect magnetic permeability of the N first magnetic cylinders is greater than magnetic permeability of the N-1 second magnetic cylinders.

In a second implementation form of the first aspect a material of the N first magnetic cylinders is a magnetic material having no interior air gap, and a material of the N-1 second magnetic cylinders is a magnetic material having an interior air gap.

In a third implementation form of the first aspect the magnetic material having no interior air gap comprises an amorphous material, a ferrite material, or a silicon steel material, and the magnetic material having an interior air gap comprises an iron-silicon material, an iron-silicon-aluminum material, or an amorphous powder.

Based on the foregoing technical solutions, leakage inductance of the coupled inductor can be increased by adding a second magnetic cylinder between the two opposite magnet yokes of the coupled inductor, thereby improving performance of the power converter connected to the coupled inductor.

### BRIEF DESCRIPTION OF DRAWINGS

To describe the technical solutions in the embodiments of the present invention more clearly, the following briefly describes the accompanying drawings required for describing the embodiments of the present invention.
FIG. 1 is a schematic diagram of a structure of a coupled helpful for understanding the present invention;
FIG. 2 is a cross-section view of a structure of a coupled inductor helpful for understanding the present invention;
FIG. 3 is a cross-section view of a structure of a coupled inductor according an embodiment of the present invention;
FIG. 4 is a schematic diagram of a structure of a coupled helpful for understanding the present invention;
FIG. 5 is a schematic diagram of a structure of a coupled inductor helpful for understanding the present invention;
FIG. 6 is a schematic diagram of a structure of a coupled inductor helpful for understanding the present invention;
FIG. 7 is a cross-section view of a structure of a coupled inductor helpful for understanding the present invention;
FIG. 8 is a cross-section view of a structure of a coupled helpful for understanding the present invention; and
FIG. 9 is a schematic structural diagram of a power helpful for understanding the present invention.

### DESCRIPTION OF EMBODIMENTS

The present invention is defined by independent claim 1. Embodiments labelled as inventive embodiments in the following, but which are not covered by the scope of claim 1, are to be understood as examples helpful for understanding the invention and not as embodiments of the invention.

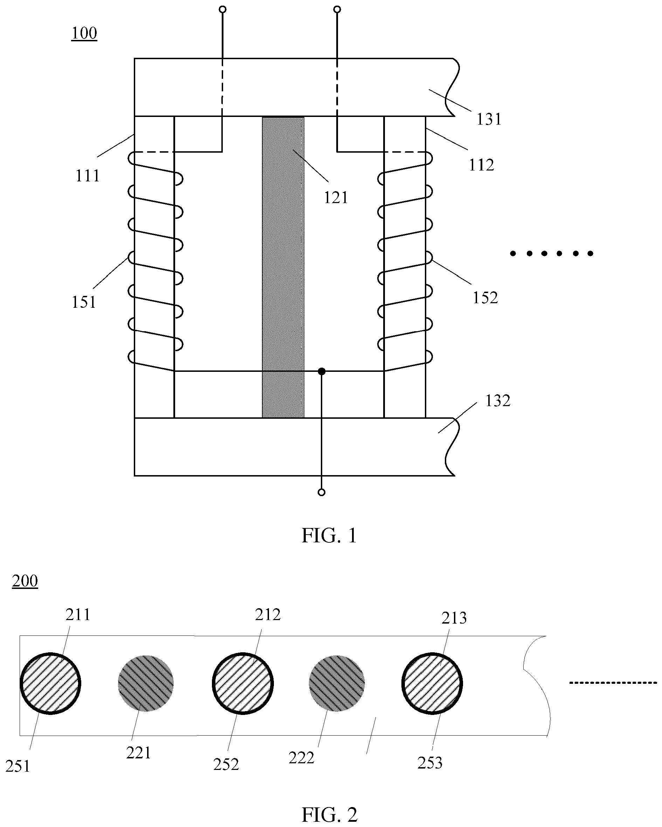

FIG. 1 is a schematic diagram of a structure of a coupled inductor 100 according to an embodiment of the present invention.

The coupled inductor 100 includes a magnetic core and at least two windings. The magnetic core includes at least two first magnetic cylinders, at least one second magnetic cylinder, and two opposite magnet yokes. The at least two first magnetic cylinders and the at least one second magnetic cylinder are disposed between the two opposite magnet yokes, the at least two windings are respectively located on the at least two first magnetic cylinders, and the at least two windings are in a one-to-one correspondence with the at least two first magnetic cylinders.

As shown in FIG. 1, a magnetic core includes two first magnetic cylinders 111 and 112, a second magnetic cylinder 121, an upper magnet yoke 131, and a lower magnet yoke 132. The two first magnetic cylinders 111 and 112 and the second magnetic cylinder 121 are separately disposed between the upper magnet yoke 131 and the lower magnet yoke 132. Two windings 151 and 152 are respectively wound around the two first magnetic cylinders 111 and 112. The two windings 151 and 152 are in a one-to-one correspondence with the two first magnetic cylinders 111 and 112.

When the coupled inductor is connected to a power converter, one end of the winding 151 and one end of the winding 152 are short-circuited and are connected to a load, and the other end of the winding 151 and the other end of the winding 152 are respectively connected to power bridge arms of the power converter. The windings 151 and 152 are configured to couple alternating currents that are generated by the power bridge arms by working in an interleaved manner. In addition, magnetic flux generated by the windings 151 and 152 causes leakage inductance through air, and the magnetic flux generated by the windings 151 and 152 also causes leakage inductance through the second magnetic cylinder.

In this embodiment of the present invention, leakage inductance of the coupled inductor can be increased by adding a second magnetic cylinder between the two opposite magnet yokes of the coupled inductor, thereby improving performance of the power converter connected to the coupled inductor. For example, performance requirements such as system stability, a ripple current, and total harmonic distortion of current on input can be met. In addition, because this type of coupled inductor needs to be added with only a magnetic cylinder, and a coil does not need to be wound around the magnetic cylinder, a processing technique is simple, and a demand for mass production can be met. In addition, because the leakage inductance of the coupled inductor is used to replace a filter inductor, system costs are reduced, and losses caused by use of the filter inductor are reduced, thereby improving system efficiency.

It should be understood that, for ease of description, FIG. 1 only shows a part of the structure of the coupled inductor 100, and the technical solution in this embodiment of the present invention is described in detail by using the part of the structure as an example. However, this embodiment of the present invention is not limited to this.

According to this embodiment of the present invention, magnetic permeability of a material of the at least two first magnetic cylinders is greater than magnetic permeability of a material of the at least one second magnetic cylinder. In other words, the first magnetic cylinder may be made from a high magnetic permeability material, and the second magnetic cylinder may be made from a low magnetic permeability material.

According to this embodiment of the present invention, the material of the at least two first magnetic cylinders may be a magnetic material having no interior air gap, for example, an amorphous material, a ferrite material, or a silicon steel material, and the material of the at least one second magnetic cylinder may be a magnetic material having an interior air gap, for example, an iron-silicon material, an iron-silicon-aluminum material, or an amorphous powder. For example, a material of the first magnetic cylinders 111 and 112 may be a ferrite material, and a material of the second magnetic cylinder 121 may be an iron-silicon material.

It should be understood that, the material of the at least two first magnetic cylinders may also be another magnetic material having no air gap inside, and the material of the at least one second magnetic cylinder may also be another magnetic material having an air gap inside. This embodiment of the present invention is not limited to this.

According to this embodiment of the present invention, the material of the at least one second magnetic cylinder may also be a magnetic material having no air gap inside, and each second magnetic cylinder of the at least one second magnetic cylinder includes two parts, where an air gap having a millimeter-scale interval is disposed between the two parts. Therefore, each second magnetic cylinder of the at least one second magnetic cylinder may be equivalent to a magnetic cylinder made from of a low magnetic permeability magnetic material. For example, a material of the second magnetic cylinder 121 may be a ferrite material, and the second magnetic cylinder 121 includes a first part and a second part, where an air gap having an interval of 1 mm to 3 mm is disposed between the first part and the second part. Therefore, the second magnetic cylinder 121 is equivalent to a magnetic cylinder made from a low magnetic permeability magnetic material.

According to this embodiment of the present invention, the at least two first magnetic cylinders and the at least one second magnetic cylinder may have a cylinder, triangular prism, rectangular, or polygonal prism shape. The shape of the first magnetic cylinder may be the same as or may be different from the shape of the second magnetic cylinder. For example, the first magnetic cylinders 111 and 112 and the second magnetic cylinder 121 may have a cylinder shape; or the first magnetic cylinders 111 and 112 may have a cylinder shape, but the second magnetic cylinder 121 may have a polygonal prism shape.

According to this embodiment of the present invention, the two opposite magnet yokes may have a round, triangular, rectangular, or polygonal shape. It should be understood that, the two opposite magnet yokes may also have a round triangle shape, a round rectangle shape, or another shape similar to a round rectangle. For example, the two opposite magnet yokes: the upper magnet yoke 131 and the lower magnet yoke 132 have a round triangle shape.

According to this embodiment of the present invention, in the coupled inductor 100 shown in FIG. 1, a cross section of the at least one second magnetic cylinder is set to enable inductance of leakage inductance that is generated by the coupled inductor 100 when the coupled inductor 100 is connected to the power converter, to meet inductance, which is needed by the power converter including the coupled inductor 100, of a filter inductor.

For example, a size of the cross section of the second magnetic cylinder 121 may be set to enable the inductance of the leakage inductance of the coupled inductor 100 to meet the inductance, which is needed by the power converter including the coupled inductor 100, of the filter inductor.

Therefore, in this embodiment of the present invention, a coupling factor of a coupled inductor is adjusted by setting a size of a cross section of at least one second magnetic cylinder, so that inductance of leakage inductance of the coupled inductor can meet inductance, which is needed by a power converter including the coupled inductor, of a filter inductor, and control precision is relatively high.

According to this embodiment of the present invention, in the coupled inductor shown in FIG. 1, the at least one second magnetic cylinder may be disposed at a position adjacent to the at least two first magnetic cylinders, and the at least two first magnetic cylinders may be parallel to the at least one second magnetic cylinder.

It should be understood that, the at least one second magnetic cylinder is disposed at a position adjacent to the at least two first magnetic cylinders, and the at least one second magnetic cylinder and the at least two first magnetic cylinders may be located in a same plane or may be located in different planes. In other words, the at least one second magnetic cylinder and the at least two first magnetic cylinders may be located in one straight line; or the at least two first magnetic cylinders are located in one straight line, and at least one second magnetic cylinder is located in another straight line.

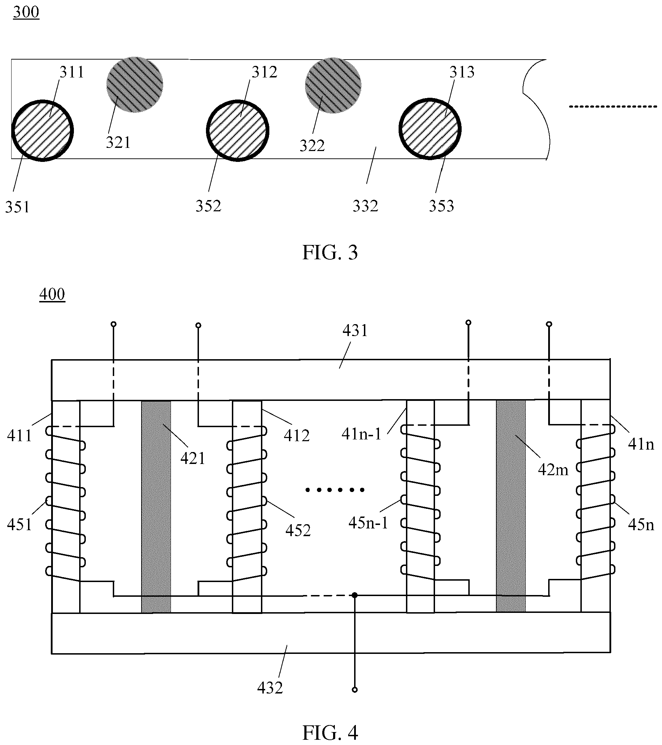

The following describes the technical solution in this embodiment of the present invention in detail with reference to embodiments shown in FIG. 2 and FIG. 3, but this embodiment of the present invention is not limited to this.

FIG. 2 is a cross-section view of a structure of a coupled inductor 200 according to another embodiment of the present invention. The coupled inductor 200 is an example of the embodiment in FIG. 1. The coupled inductor 200 is similar to the coupled inductor 100 in FIG. 1, and a detailed description is appropriately omitted herein.

FIG. 2 only exemplarily shows in part a magnetic core and at least two windings, of the coupled inductor. First magnetic cylinders 211, 212, and 213 and second magnetic cylinders 221 and 222 are arranged along a straight line. The second magnetic cylinder 221 is located between the first magnetic cylinders 211 and 212, and the second magnetic cylinder 222 is located between the first magnetic cylinders 212 and 213. Windings 251, 252, and 253 are respectively wound around the first magnetic cylinders 211, 212, and 213.

In this embodiment of the present invention, leakage inductance of the coupled inductor can be increased by adding a second magnetic cylinder between the two opposite magnet yokes of the coupled inductor, thereby improving performance of the power converter connected to the coupled inductor. In addition, because this type of coupled inductor needs to be added with only a magnetic cylinder, and a coil does not need to be wound around the magnetic cylinder, a processing technique is simple, and a demand for mass production can be met. In addition, because the leakage inductance of the coupled inductor is used to replace a filter inductor, system costs are reduced, and losses caused by use of the filter inductor are reduced, thereby improving system efficiency.

In addition, because the added at least one second magnetic cylinder is disposed between at least two first magnetic cylinders, a volume of the coupled inductor does not increase obviously, which is beneficial to a space layout of a system.

FIG. 3 is a cross-section view of a structure of a coupled inductor 300 according to another embodiment of the present invention. The coupled inductor 300 is an example of the embodiment in FIG. 1. The coupled inductor 300 is similar to the coupled inductor 100 in FIG. 1, and a detailed description is appropriately omitted herein.

FIG. 3 only exemplarily shows in part a magnetic core and at least two windings, of the coupled inductor. First magnetic cylinders 311, 312, and 313 are arranged along a straight line, and second magnetic cylinders 321 and 322 are arranged along a straight line. The second magnetic cylinder 321 is located between the first magnetic cylinders 311 and 312, and the second magnetic cylinder 322 is located between the first magnetic cylinders 312 and 313. Windings 351, 352, and 353 are respectively wound around the first magnetic cylinders 311, 312, and 313.

In this embodiment of the present invention, leakage inductance of the coupled inductor can be increased by adding a second magnetic cylinder between the two opposite magnet yokes of the coupled inductor, thereby improving performance of the power converter connected to the coupled inductor. In addition, because this type of coupled inductor needs to be added with only a magnetic cylinder, and a coil does not need to be wound around the magnetic cylinder, a processing technique is simple, and a demand for mass production can be met. In addition, because the leakage inductance of the coupled inductor is used to replace a filter inductor, system costs are reduced, and losses caused by use of the filter inductor are reduced, thereby improving system efficiency.

FIG. 4 is a schematic diagram of a structure of a coupled inductor 400 according to another embodiment of the present invention. The coupled inductor 400 is an example of the embodiment in FIG. 1. The coupled inductor 400 is similar to the coupled inductor 100 in FIG. 1, and a detailed description is appropriately omitted herein.

Specifically, at least two first magnetic cylinders include N first magnetic cylinders, at least one second magnetic cylinder includes N-1 second magnetic cylinders, and each second magnetic cylinder of the N-1 second magnetic cylinders is disposed between two first magnetic cylinders of the N first magnetic cylinders, where N is an integer greater than or equal to 2.

As shown in FIG. 4, the N first magnetic cylinders are separately first magnetic cylinders 411, 412, ..., and 41n, and the N-1 second magnetic cylinders are separately second magnetic cylinder 421, ..., and 42m, where m = n-1. The first magnetic cylinders 411, 412, ..., and 41n and the second magnetic cylinders 421, ..., and 42m are disposed between an upper magnet yoke 431 and a lower magnet yoke 432, and the i^{th} second magnetic cylinder of the second magnetic cylinders 421, ..., and 42m is disposed between the i^{th} first magnetic cylinder and the (i+1)^{th} first magnetic cylinder of the first magnetic cylinders 411, 412, ..., and 41n, where a value of i ranges from 1 to m. For example, the second magnetic cylinder 421 is disposed between the first magnetic cylinders 411 and 412, and the second magnetic cylinder 42m is disposed between the first magnetic cylinders 41n-1 and 41n. Windings 451, 452, ..., and 45n are respectively wound around the first magnetic cylinders 411, 412, ..., and 41n.

In this embodiment of the present invention, leakage inductance of the coupled inductor can be increased by adding a second magnetic cylinder between the two opposite magnet yokes of the coupled inductor, thereby improving performance of the power converter connected to the coupled inductor. In addition, because this type of coupled inductor needs to be added with only a magnetic cylinder, and a coil does not need to be wound around the magnetic cylinder, a processing technique is simple, and a demand for mass production can be met. In addition, because the leakage inductance of the coupled inductor is used to replace a filter inductor, system costs are reduced, and losses caused by use of the filter inductor are reduced, thereby improving system efficiency.

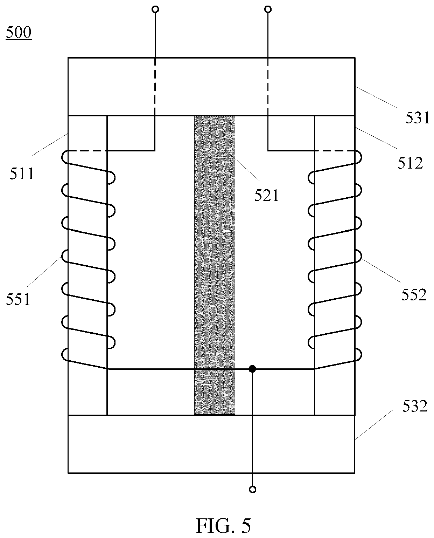

FIG. 5 is a schematic diagram of a structure of a coupled inductor 500 according to another embodiment of the present invention. The coupled inductor 500 is an example of the embodiment in FIG. 1 or FIG. 2. The coupled inductor 500 is similar to the coupled inductor 100 in FIG. 1, and a detailed description is appropriately omitted herein.

Specifically, according to this embodiment of the present invention, the coupled inductor 500 includes: two first magnetic cylinders 511 and 512, one second magnetic cylinder 521, an upper magnet yoke 531, a lower magnet yoke 532, and two windings 551 and 552. The first magnetic cylinders 511 and 512 and the second magnetic cylinder 521 are disposed between the upper magnet yoke 531 and the lower magnet yoke 532, and the second magnetic cylinder 521 is located between the first magnetic cylinders 511 and 512. The winding 551 is wound around the first magnetic cylinder 511, and the winding 552 is wound around the first magnetic cylinder 512.

Therefore, in this embodiment of the present invention, leakage inductance of the coupled inductor can be increased by adding a second magnetic cylinder between the two opposite magnet yokes of the coupled inductor, thereby improving performance of the power converter connected to the coupled inductor. In addition, because this type of coupled inductor needs to be added with only a magnetic cylinder, and a coil does not need to be wound around the magnetic cylinder, a processing technique is simple, and a demand for mass production can be met. In addition, because the leakage inductance of the coupled inductor is used to replace a filter inductor, system costs are reduced, and losses caused by use of the filter inductor are reduced, thereby improving system efficiency.

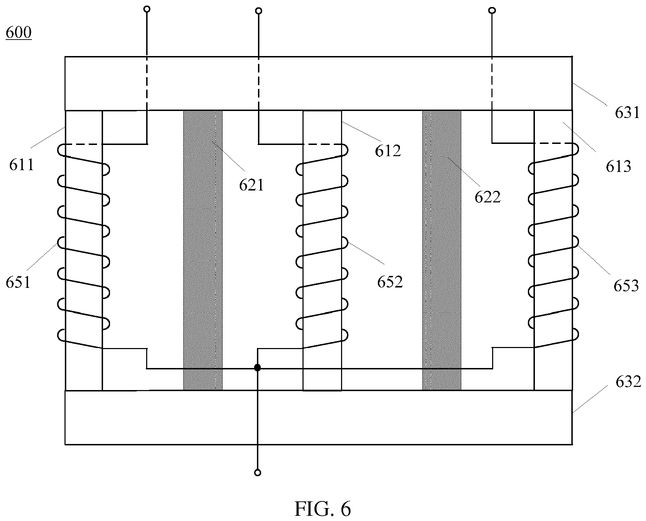

FIG. 6 is a schematic diagram of a structure of a coupled inductor 600 according to another embodiment of the present invention. The coupled inductor 600 is an example of the embodiment in FIG. 1 or FIG. 2. The coupled inductor 600 is similar to the coupled inductor 100 in FIG. 1, and a detailed description is appropriately omitted herein.

In the coupled inductor 600 shown in FIG. 6, N first magnetic cylinders are three first magnetic cylinders, and N-1 second magnetic cylinders are two second magnetic cylinders.

Specifically, according to this embodiment of the present invention, the coupled inductor 600 includes three first magnetic cylinders 611, 612, and 613, two second magnetic cylinders 621 and 622, an upper magnet yoke 631, a lower magnet yoke 632, and three windings 651, 652, and 653. The first magnetic cylinders 611, 612, and 613 and the two second magnetic cylinders 621 and 622 are disposed between the upper magnet yoke 631 and the lower magnet yoke 632; and the second magnetic cylinder 621 is located between the first magnetic cylinders 611 and 612, and the second magnetic cylinder 622 is located between the first magnetic cylinders 612 and 613. The winding 651 is wound around the first magnetic cylinder 611, the winding 652 is wound around the first magnetic cylinder 612, and the winding 653 is wound around the first magnetic cylinder 613.

Therefore, in this embodiment of the present invention, leakage inductance of the coupled inductor can be increased by adding a second magnetic cylinder between the two opposite magnet yokes of the coupled inductor, thereby improving performance of the power converter connected to the coupled inductor. In addition, because this type of coupled inductor needs to be added with only a magnetic cylinder, and a coil does not need to be wound around the magnetic cylinder, a processing technique is simple, and a demand for mass production can be met. In addition, because the leakage inductance of the coupled inductor is used to replace a filter inductor, system costs are reduced, and losses caused by use of the filter inductor are reduced, thereby improving system efficiency.

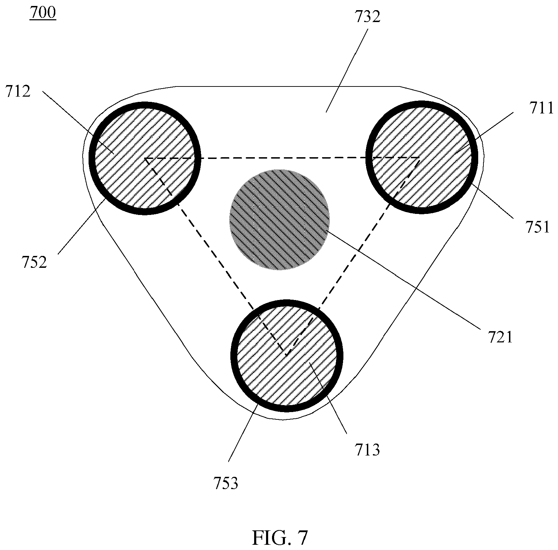

FIG. 7 is a cross-section view of a structure of a coupled inductor 700 according to another embodiment of the present invention. The coupled inductor 700 is an example of the embodiment in FIG. 1 or FIG. 3. The coupled inductor 700 is similar to the coupled inductor 100 in FIG. 1, and a detailed description is appropriately omitted herein.

In the coupled inductor 700 shown in FIG. 7, at least one first magnetic cylinder includes three first magnetic cylinders 711, 712, and 713, and at least one second magnetic cylinder includes one second magnetic cylinder 721. The three first magnetic cylinders are arranged in a triangle, and the second magnetic cylinder is disposed in the middle of the triangle.

Specifically, according to this embodiment of the present invention, the coupled inductor 700 includes three first magnetic cylinders 711, 712, and 713, one second magnetic cylinder 721, an upper magnet yoke (not shown), a lower magnet yoke 732, and three windings 751, 752, and 753. The first magnetic cylinders 711, 712, and 713 and the second magnetic cylinder 721 are disposed between the upper magnet yoke and the lower magnet yoke 732, and the three first magnetic cylinders 711, 712, and 713 are arranged in a triangle. That is, the three first magnetic cylinders 711, 712, and 713 are respectively located at three vertex angles of the triangle, and the second magnetic cylinder 721 is located in the middle of the triangle. The winding 751 is wound around the first magnetic cylinder 711, the winding 752 is wound around the first magnetic cylinder 712, and the winding 753 is wound around the first magnetic cylinder 713.

Herein, a description is provided by only using an example in which the magnet yokes have a round triangle shape, and the first magnetic cylinders 711, 712, and 713 and the second magnetic cylinder 721 have a round shape. This embodiment of the present invention is not limited to this. For example, the magnet yokes may also have another shape, for example, a round or rectangular shape; and the first magnetic cylinders and the second magnetic cylinder may also have another shape, for example, a polygonal shape.

Therefore, in this embodiment of the present invention, leakage inductance of the coupled inductor can be increased by adding a second magnetic cylinder between the two opposite magnet yokes of the coupled inductor, thereby improving performance of the power converter connected to the coupled inductor. In addition, because this type of coupled inductor needs to be added with only a magnetic cylinder, and a coil does not need to be wound around the magnetic cylinder, a processing technique is simple, and a demand for mass production can be met. In addition, because the leakage inductance of the coupled inductor is used to replace a filter inductor, system costs are reduced, and losses caused by use of the filter inductor are reduced, thereby improving system efficiency.

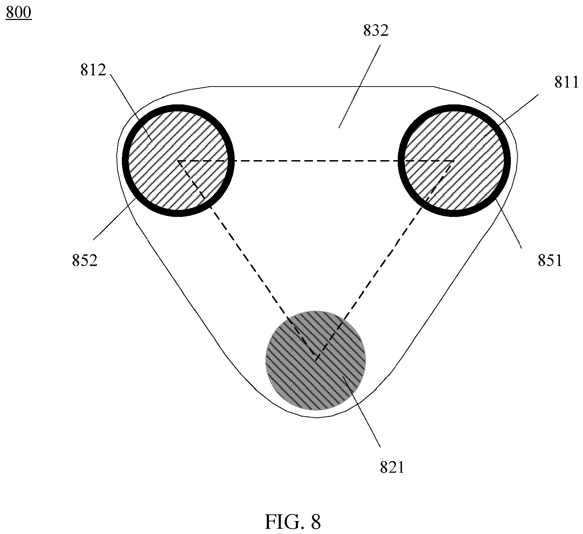

FIG. 8 is a cross-section view of a structure of a coupled inductor 800 according to another embodiment of the present invention. The coupled inductor 800 is an example of the embodiment in FIG. 1 or FIG. 3. The coupled inductor 800 is similar to the coupled inductor 100 in FIG. 1, and a detailed description is appropriately omitted herein.

In the coupled inductor 800 shown in FIG. 8, at least two first magnetic cylinders include two first magnetic cylinders, at least one second magnetic cylinder includes one second magnetic cylinder, and the two first magnetic cylinders and the second magnetic cylinder are arranged in a triangle.

Specifically, according to this embodiment of the present invention, the coupled inductor 800 includes two first magnetic cylinders 811 and 812, one second magnetic cylinder 821, an upper magnet yoke (not shown), a lower magnet yoke 832, and two windings 851 and 852. The first magnetic cylinders 811 and 812 and the second magnetic cylinder 821 are disposed between an upper magnet yoke 831 and the lower magnet yoke 832, and the two first magnetic cylinders 811 and 812 and the second magnetic cylinder 821 are arranged in a triangle. That is, the two first magnetic cylinders 811 and 812 and the second magnetic cylinder 821 are respectively located at three vertex angles of the triangle. The winding 851 is wound around the first magnetic cylinder 811, and the winding 852 is wound around the first magnetic cylinder 812. The second magnetic cylinder 821 is not wound with a winding.

Herein, a description is provided by only using an example in which the magnet yokes have a round triangle shape, and the first magnetic cylinders 811 and 812 and the second magnetic cylinder 821 have a round shape. This embodiment of the present invention is not limited to this. For example, the magnet yokes may also have another shape, for example, a round or rectangular shape; and the first magnetic cylinders and the second magnetic cylinder may also have another shape, for example, a polygonal shape.

Therefore, in this embodiment of the present invention, leakage inductance of the coupled inductor can be increased by adding a second magnetic cylinder between the two opposite magnet yokes of the coupled inductor, thereby improving performance of the power converter connected to the coupled inductor. In addition, because this type of coupled inductor needs to be added with only a magnetic cylinder, and a coil does not need to be wound around the magnetic cylinder, a processing technique is simple, and a demand for mass production can be met. In addition, because the leakage inductance of the coupled inductor is used to replace a filter inductor, system costs are reduced, and losses caused by use of the filter inductor are reduced, thereby improving system efficiency.

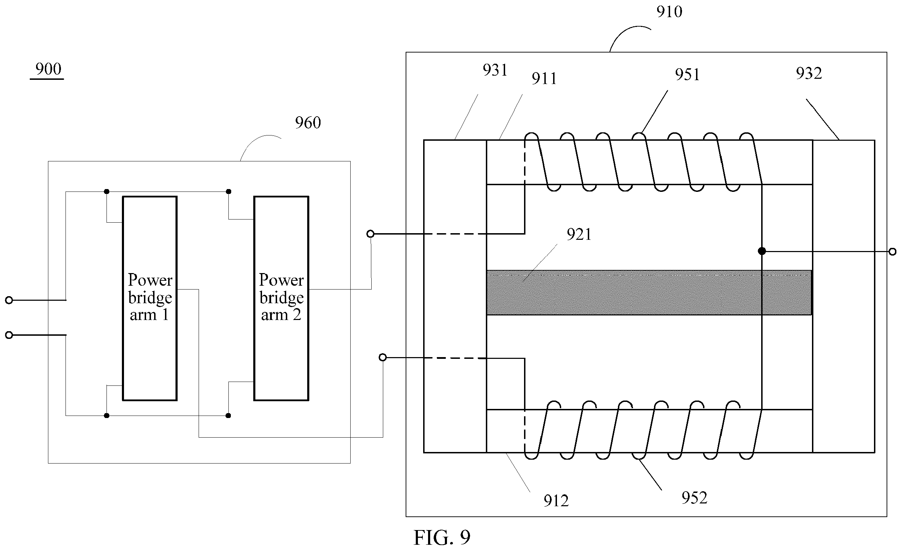

FIG. 9 is a schematic structural diagram of a power converter 900 according to an embodiment of the present invention. The power converter 900 includes at least two power bridge arms and the coupled inductor described in the foregoing embodiments. At least two windings of the coupled inductor are respectively connected to the at least two power bridge arms.

The following description is provided by using two power bridge arms 960 as an example, and this embodiment of the present invention is not limited to this. The coupled inductor in this embodiment of the present invention may be connected to multiple power bridge arms, and each power bridge arm corresponds to one input end of the coupled inductor.

The power converter 900 shown in FIG. 9 includes: two power bridge arms 960 and a coupled inductor 910.

A structure of the coupled inductor 910 is the same as the coupled inductor 500 shown in FIG. 5 in the foregoing embodiments of the coupled inductor, and a detailed description is appropriately omitted herein. Output ends of the two power bridge arms 960 are respectively connected to input ends of two windings 951 and 952 included in the coupled inductor 910.

Specifically, an input end of a power bridge arm 1 and an input end of a power bridge arm 2 are connected in parallel between two input ends of the power converter 900. An output end of the power bridge arm 1 is connected to an input end of the winding 952 of the coupled inductor. An output end of the power bridge arm 2 is connected to an input end of the winding 951 of the coupled inductor. Output ends of the windings 951 and 952 are connected to an output end of the power converter 900. The output end of the power converter 900 is connected to a load (not shown). The coupled inductor 910 includes first magnetic cylinders 911 and 912, a second magnetic cylinder 921, an upper magnet yoke 931, a lower magnet yoke 932, and the two windings 951 and 952. The first magnetic cylinders 911 and 912 and the second magnetic cylinder 921 are disposed between the upper magnet yoke 931 and the lower magnet yoke 932, and the second magnetic cylinder 921 is located between the first magnetic cylinders 911 and 912. The winding 951 is wound around the first magnetic cylinder 911, and the winding 952 is wound around the first magnetic cylinder 912.

Therefore, according to the power converter in this embodiment of the present invention, leakage inductance of the coupled inductor can be increased by adding a second magnetic cylinder between the two opposite magnet yokes of the coupled inductor, thereby improving performance of the power converter connected to the coupled inductor. In addition, a processing technique for this type of coupled inductor is simple, and a demand for mass production can be met. In addition, because the leakage inductance of the coupled inductor is used to replace a filter inductor, system costs are reduced, and losses caused by use of the filter inductor are reduced, thereby improving system efficiency.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

The foregoing descriptions are merely specific implementation manners of the present invention, but are not intended to limit the protection scope of the present invention. The protection scope of the present invention shall be subject to the protection scope of the claims.

## Claims

1. A coupled inductor (300), comprising: a magnetic core and windings (351, 352, 353), N being at least three, wherein the magnetic core comprises:
• N first magnetic cylinders (311, 312, 313), N-1, being at least two, second magnetic cylinders (321, 322), and two opposite magnet yokes and each of the N windings (351, 352, 353) is arranged on a corresponding first magnetic cylinder (311, 312, 313) of the N first magnetic cylinders (311, 312, 313), wherein the N first magnetic cylinders (311, 312, 313) and the N-1 second magnetic cylinders (321, 322) have a cylinder, triangular prism, rectangular, or polygonal prism shape,
• the N first magnetic cylinders (311, 312, 313) and the N-1 second magnetic cylinders (321, 322) are disposed between the two opposite magnet yokes;
• the N first magnetic cylinders (311, 312, 313) are arranged along a first straight line and the N-1 second magnetic cylinders (321, 322) are arranged on a second straight line, and an extension direction of the first straight line is parallel to an extension direction of the second straight line, wherein the first straight line is distanced to the second straight line, and
• in the extension direction of the first or second straight line, a first second magnetic cylinder of the N-1 second magnetic cylinders (321, 322) is arranged between a first and a second first magnetic cylinder of the N first magnetic cylinders (311, 312, 313) and a second second magnetic cylinder of the N-1 second magnetic cylinders (321, 322) is arranged between the second and a third first magnetic cylinder of the N first magnetic cylinders (311, 312, 313).

2. The coupled inductor according to claim 1, wherein magnetic permeability of the N first magnetic cylinders is greater than magnetic permeability of the N-1 second magnetic cylinders.

3. The coupled inductor according to any one of claims 1 or 2, wherein a material of the N first magnetic cylinders is a magnetic material having no interior air gap, and a material of the N-1 second magnetic cylinders is a magnetic material having an interior air gap.

4. The coupled inductor according to claim 3, wherein the magnetic material having no interior air gap comprises an amorphous material, a ferrite material, or a silicon steel material, and the magnetic material having an interior air gap comprises an iron-silicon material, an iron-silicon-aluminum material, or an amorphous powder.

## Patentansprüche

1. Gekoppelter Induktor (300), Folgendes umfassend: einen Magnetkern und N Wicklungen (351, 352, 353), wobei N mindestens drei ist, wobei der Magnetkern Folgendes umfasst:
• N erste Magnetzylinder (311, 312, 313), N-1, was mindestens zwei ist, zweite Magnetzylinder (321, 322) und zwei entgegengesetzte Magnetjoche, und wobei jede der N Wicklungen (351, 352, 353) auf einem entsprechenden ersten Magnetzylinder (311, 312, 313) der N ersten Magnetzylinder (311, 312, 313) angeordnet ist, wobei die N ersten Magnetzylinder (311, 312, 313) und die N-1 zweiten Magnetzylinder (321, 322) eine zylindrische, dreieckig-prismatische, rechteckige oder polygonalprismatische Gestalt aufweisen,
• wobei die N ersten Magnetzylinder (311, 312, 313) und die N-1 zweiten Magnetzylinder (321, 322) zwischen den beiden entgegengesetzten Magnetjochen angeordnet sind;
• wobei die N ersten Magnetzylinder (311, 312, 313) entlang einer ersten geraden Linie angeordnet sind und die N-1 zweiten Magnetzylinder (321, 322) auf einer zweiten geraden Linie angeordnet sind und eine Ausdehnungsrichtung der ersten geraden Linie parallel zu einer Ausdehnungsrichtung der zweiten geraden Linie ist, wobei die erste gerade Linie von der zweiten geraden Linie beabstandet ist, und
• wobei in der Ausdehnungsrichtung der ersten oder der zweiten geraden Linie ein erster zweiter Magnetzylinder der N-1 zweiten Magnetzylinder (321, 322) zwischen einem ersten und einem zweiten ersten Magnetzylinder der N ersten Magnetzylinder (311, 312, 313) angeordnet ist und ein zweiter zweiter Magnetzylinder der N-1 zweiten Magnetzylinder (321, 322) zwischen dem zweiten und einem dritten ersten Magnetzylinder der N ersten Magnetzylinder (311, 312, 313) angeordnet ist.

2. Gekoppelter Induktor nach Anspruch 1, wobei eine magnetische Permeabilität der N ersten Magnetzylinder größer ist als eine magnetische Permeabilität der N-1 zweiten Magnetzylinder.

3. Gekoppelter Induktor nach einem der Ansprüche 1 oder 2, wobei ein Material der N ersten Magnetzylinder ein Magnetmaterial ist, das keinen inneren Luftspalt aufweist, und ein Material der N-1 zweiten Magnetzylinder ein Magnetmaterial ist, das einen inneren Luftspalt aufweist.

4. Gekoppelter Induktor nach Anspruch 3, wobei das Magnetmaterial, das keinen inneren Luftspalt aufweist, ein amorphes Material, ein Ferrit-Material oder ein Silizium-StahlMaterial umfasst, und das Magnetmaterial, das einen inneren Luftspalt aufweist, ein Eisen-Silizium-Material, ein Eisen-Silizium-Aluminium-Material oder ein amorphes Pulver umfasst.

## Revendications

1. Inducteur couplé (300), comprenant : un noyau magnétique et N enroulements (351, 352, 353), N étant au moins trois, dans lequel le noyau magnétique comprend :
• N premiers cylindres magnétiques (311, 312, 313), N-1, étant au moins deux, deuxièmes cylindres magnétiques (321, 322), et deux culasses d'aimant opposées, et chacun des N enroulements (351, 352, 353) est disposé sur un premier cylindre magnétique correspondant (311, 312, 313) des N premiers cylindres magnétiques (311, 312, 313), dans lequel les N premiers cylindres magnétiques (311, 312, 313) et les N-1 deuxièmes cylindres magnétiques (321, 322) ont une forme de cylindre, de prisme triangulaire, rectangulaire, ou de prisme polygonal,
• les N premiers cylindres magnétiques (311, 312, 313) et les N-1 deuxièmes cylindres magnétiques (321, 322) sont disposés entre les deux culasses d'aimant opposées ;
• les N premiers cylindres magnétiques (311, 312, 313) sont disposés le long d'une première ligne droite et les N-1 deuxièmes cylindres magnétiques (321, 322) sont disposés sur une deuxième ligne droite, et une direction d'extension de la première ligne droite est parallèle à une direction d'extension de la deuxième ligne droite, dans lequel la première ligne droite est à distance de la deuxième ligne droite, et
• dans la direction d'extension de la première ou deuxième ligne droite, un premier deuxième cylindre magnétique des N-1 deuxièmes cylindres magnétiques (321, 322) est disposé entre un premier et un deuxième premier cylindre magnétique des N premiers cylindres magnétiques (311, 312, 313) et un deuxième deuxième cylindre magnétique des N-1 deuxièmes cylindres magnétiques (321, 322) est disposé entre le deuxième et un troisième premier cylindre magnétique des N premiers cylindres magnétiques (311, 312, 313).

2. Inducteur couplé selon la revendication 1, dans lequel la perméabilité magnétique des N premiers cylindres magnétiques est supérieure à la perméabilité magnétique des N-1 deuxièmes cylindres magnétiques.

3. Inducteur couplé selon l'une quelconque des revendications 1 et 2, dans lequel un matériau des N premiers cylindres magnétiques est un matériau magnétique n'ayant pas d'entrefer intérieur, et un matériau des N-1 deuxièmes cylindres magnétiques est un matériau magnétique ayant un entrefer intérieur.

4. Inducteur couplé selon la revendication 3, dans lequel le matériau magnétique n'ayant pas d'entrefer intérieur comprend un matériau amorphe, un matériau en ferrite, ou un matériau en acier au silicium, et le matériau magnétique ayant un entrefer intérieur comprend un matériau en fer-silicium, un matériau en fer-silicium-aluminium, ou une poudre amorphe.
